# EUROPEAN PATENT SPECIFICATION

(11) **EP 1 807 623 B1**
(45) Date of publication and mention of the grant of the patent: **24.04.2019**
(21) Application number: 05799087.1
(22) Date of filing: 25.10.2005
(51) Int. Cl.: F04B 39/00, F04B 53/00, F16F 15/22, F16F 15/28

(54) **RECIPROCATING COMPRESSOR**
HUBKOLBENVERDICHTER
COMPRESSEUR ALTERNATIF

(30) Priority: 01.11.2004 JP 2004317879
(43) Date of publication of application: 18.07.2007
(73) Proprietor: Panasonic Appliances Refrigeration Devices Singapore, Singapore 469267 (SG)
(72) Inventor: KUBOTA, Akihiko c/o Matsushita Electric Ind. Co.,, Shiromi 1-chome,Osaka-shi,Osaka 540-6319 (JP); NAGAO, Takahide c/o Matsushita Electric Ind. Co.,L, Shiromi 1-chome,Osaka-shi,Osaka 540-6319 (JP); TSUBOI, Kosuke c/o Matsushita Electric Ind. Co.,Lt, Shiromi 1-chome,Osaka-shi,Osaka 540-6319 (JP); KAKIUCHI, Takashi c/o Matsushita Elec. Ind. Co., L, Shiromi 1-chome,Osaka-shi,Osaka 540-6319 (JP)
(74) Representative: Grünecker Patent- und Rechtsanwälte PartG mbB
(86) International application number: PCT/JP2005/019947
(87) International publication number: WO 2006/049108

(56) References cited:
- US-A- 4 517 931
- US-A- 4 979 428
- PATENT ABSTRACTS OF JAPAN vol. 1996, no. 01, 31 January 1996 (1996-01-31) & JP 07 238885 A (TOSHIBA CORP), 12 September 1995 (1995-09-12) cited in the application
- PATENT ABSTRACTS OF JAPAN vol. 2003, no. 05, 12 May 2003 (2003-05-12) & JP 2003 003958 A (MATSUSHITA REFRIG CO LTD), 8 January 2003 (2003-01-08)
- PATENT ABSTRACTS OF JAPAN vol. 1997, no. 08, 29 August 1997 (1997-08-29) & JP 09 100790 A (DAIKIN IND LTD), 15 April 1997 (1997-04-15)

## Description

### Technical Field

The present invention relates to a reciprocating compressor according to claim 1. A reciprocating compressor according to the preamble of claim 1 is known from document JPH07-238885 A.

The present invention wants, in particular, to reduce vibrations produced by reciprocating compressors.

US 4 517 931 relates to an improved variable stroke internal combustion engine. The power stroke and exhaust stroke of the engine are relatively longer than the intake stroke and compression stroke for increased power output from the engine. A connecting rod is pivotally connected to the piston and a trunnion assembly. The trunnion assembly is rotatably mounted to a journal on the crankshaft. A control shaft is rotatably mounted within the engine and connected to the crankshaft so that the control shaft rotates at one-half the angular velocity of the crankshaft. A control link is rotatably mounted on a journal of the control shaft with its opposite end being pivotally connected to the trunnion assembly.

JP 2003 003958 A relates to a reciprocating hermetic electric compressor of inverter-driven type using the coolant comprising as a main component the hydrocarbon coolant mainly comprising R600a, and being driven with a plurality of operation frequencies including a revolution speed less than a commercial power supply frequency. In this hermetic electric compressor, a compression element is built at an approximately upper part of an electric element, and is elastically supported by a closed container at a lower part of the stator via a stator. Accordingly, the hermetic electric compressor in which the vibration is reduced and the noise is decreased is provided.

US 4 979 428 A relates to an air compressor in which a piston is reciprocated in a cylinder by means of an eccentric. The eccentric is connected to the piston by means of a linkage consisting of an arm, a connecting rod and a control link. By virtue of the arm and the control link, the speed of the piston is greatly reduced as the piston approaches the terminal end of its compression stroke.

JP H09-100790 A relates to a compressor constituted so as to revolve a piston in a cylinder chamber with an oscillating bush as a fulcrum through a blade in accordance with rotation of a drive shaft. The piston is set longer than the vertical dimension of an eccentric shaft part, and an upper part space and a lower part space are respectively provided on both of upper and lower sides of the eccentric shaft part on the side of a piston inner peripheral part. Upper side and lower side balance weights roughly forming a horse shoe shape seen from a flat level are installed on both of upper and lower surfaces of the eccentric shaft part on the side of a center of gravity rather than a partition line to partition the eccentric shaft part into a center of gravity side and an opposite center of gravity side seen from a flat level on a shaft center of the drive shaft.

### Background Art

Energy-saving has been increasingly required to home-use refrigerators because of a movement of global environmental protection. In such a climate, refrigerant compressors to be used in the household refrigerators have employed an inverter technique to reduce the number of rotations (rpm), namely this technique can operate the reciprocating compressors at a lower rpm. Refrigerant gas also starts employing R600a gas having a lower greenhouse coefficient. Those technical changes require a greater capacity of a cylinder to be placed in the refrigerant compressors in order to maintain refrigerating effect of the refrigerant. However, a greater piston of reciprocating compressors makes it difficult to suppress vibrations produced by reciprocal motion of the piston to a low level. On the other hand, various measures have been taken for improving the reliability of the reciprocating compressors.

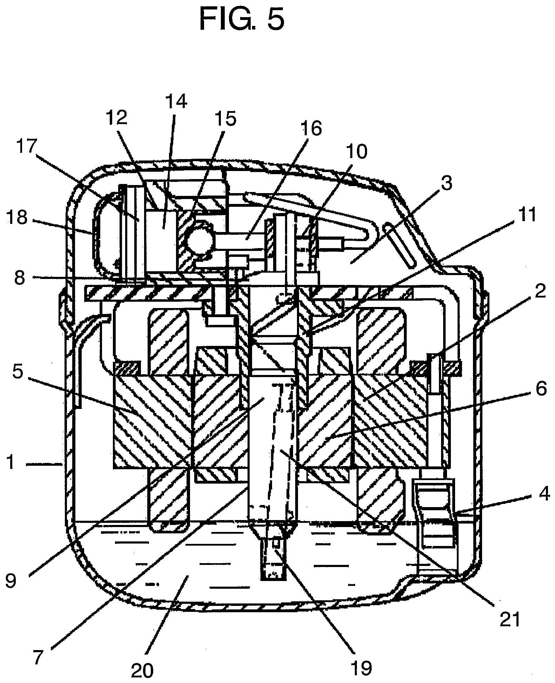

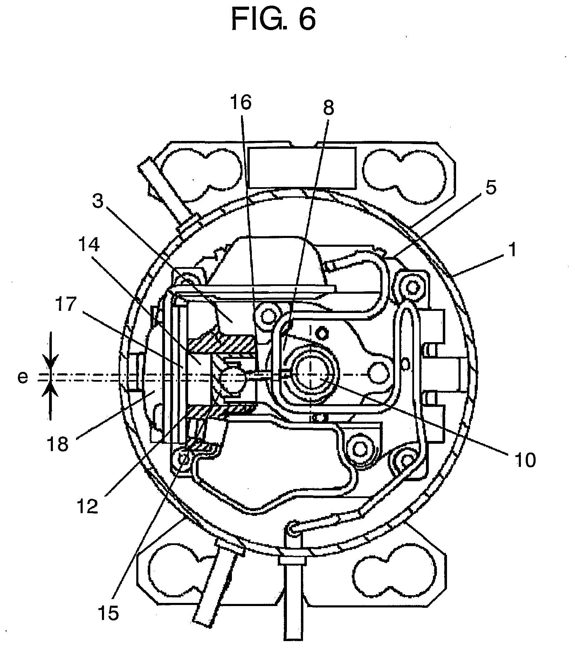

One of conventional reciprocating compressors is disclosed in Japanese Patent Unexamined Publication JP H07 - 238885 A. This conventional reciprocating compressor reduces lateral pressure of the piston by offsetting the cylinder with respect to the rotary center of the shaft, thereby improving the reliability. Fig. 5 shows a sectional view of the conventional reciprocating compressor, and Fig. 6 shows a top sectional view illustrating parts of the reciprocating compressor shown in Fig. 5. In Figs. 5 and 6, hermetic container 1 accommodates motor element 2, and compressing element 3 driven by motor element 2. Motor element 2 and compressing element 3 are assembled integrally, and resiliently supported by plural supporting springs 4 in container 1. Springs 4 are placed at appropriate intervals along the circumference of container 1.

Motor element 2 includes stator 5 formed by laminating plate-like stator iron-cores, and rotor 6 accommodated rotatably in stator 5. Crankshaft 7 includes shaft 9 and eccentric section 10 via balancing weight 8. Rotor 6 is mounted on shaft 9, and supported rotatably by plain bearing 11 of compressing element 3.

Compressing element 3 comprises piston 15, connecting rod 16, valve plate 17, and cylinder head 18. Compressing element 3 is driven by motor element 2 via shaft 9. Piston 15 is disposed slidably in compression chamber 14 formed by cylinder 12. Connecting rod 16 connects piston 15 to eccentric section 10 of crankshaft 7. Valve plate 17 is disposed on the head side of cylinder 12 and includes a sucking valve (not shown) and a discharging valve (not shown). Cylinder head 18 covers valve plate 17 externally.

Cylinder 12 is placed such that the axis line thereof runs offset the axis line of shaft 9 by offset amount "e". Balancing weight 8 is placed such that the center of gravity thereof is positioned on the line running through the both axial centers of shaft 9 and eccentric section 10 and opposite to eccentric section 10 with respect to shaft 9.

At the lower part of crankshaft 7, oil pump 19 is disposed, and an end of pump 19 dips into oil 20 pooled in hermetic container 1. Rotating crankshaft 7 works oil pump 19, thereby supplying oil 20 to sliding sections of compressing element 3 via oil passage 21 provided in crankshaft 7. The respective sliding sections are thus lubricated.

An operation of the reciprocating compressor thus constructed is demonstrated hereinafter. Energizing motor element 2 sets motor element 2 in motion, and rotates rotor 6. Crankshaft 7 integrally formed with rotor 6 thus rotates, and the motion of eccentric section 10 travels via connecting rod 16 and then reciprocates piston 15 in cylinder 12, so that the refrigerant gas (not shown) is compressed continuously. In compressing the refrigerant, since the axis line of cylinder 12 is placed offset from the axis line of shaft 9 by offset amount "e", the load applied to the sliding faces between piston 15 and cylinder 12 can be reduced. As a result, high reliability and high energy efficiency can be achieved.

Rotating of balancing weight 8 together with crankshaft 7 reduces unbalance due to the reciprocal motion of piston 15, so that the vibrations produced by the reciprocating compressor can be reduced. However, the positioning of the center of gravity of balancing weight 8 disclosed in the foregoing Japanese Patent Unexamined Publication No. H07 - 238885 possibly produces greater vibrations due to the offset placement of cylinder 12 than the case where cylinder 12 is placed without offsetting.

### Disclosure of Invention

The present invention provides reliable reciprocating compressors that work more efficiently in energy consumption and produce smaller vibrations. The reciprocating compressor of the present invention includes a cylinder and a balancing weight. The cylinder is placed offset such that the both axis lines of the cylinder and a main shaft will not cross each other, and the balancing weight is placed such that the center of gravity thereof is positioned generally opposite the center of an eccentric section with respect to the axial line of the main shaft and deviated along the rotating direction from the place just opposite to the center of the eccentric section. The foregoing structure allows reducing lateral pressure of the piston, so that the reliability and efficiency of the reciprocating compressor can be increased. The structure also allows efficiently canceling unbalancing-force produced by the motions of the piston, connecting rod, and the eccentric section more effectively with the motion force of the balancing weight, so that the vibrations of the reciprocating compressor can be reduced.

### Brief Description of the Drawings

Fig. 1 shows a sectional view illustrating a reciprocating compressor in accordance with an embodiment of the present invention.
Fig. 2 shows a top view illustrating the reciprocating compressor shown in Fig. 1.
Fig. 3 schematically illustrates essential parts of the reciprocating compressor shown in Fig. 1.
Fig. 4 shows vibration characteristics of the reciprocating compressor shown in Fig. 1.
Fig. 5 shows a sectional view of a conventional reciprocating compressor.
Fig. 6 shows a partial top sectional view of the conventional reciprocating compressor.

### Detailed Description of the Preferred Embodiment

A reciprocating compressor of the present invention includes a hermetic container which accommodates a compressing element for compressing refrigerant gas. The compressing element comprises the following elements:
a crankshaft generally disposed perpendicularly and having a main shaft and an eccentric section;
a block forming a cylindrical cylinder;
a piston reciprocating in the cylinder;
a connecting rod connecting the eccentric section to the piston; and
a balancing weight for balancing vibrations produced by foregoing elements including at least one of the piston, the connecting rod and the eccentric section.

The cylinder is placed offset such that the axis lines of both the cylinder and the main shaft will not cross each other, and the balancing weight is placed such that the center of gravity thereof is positioned generally opposite the center of the eccentric section with respect to the axial line of the main shaft and deviated along the rotating direction from the place just opposite to the center of the eccentric section.

The foregoing structure allows reducing lateral pressure of the piston, so that the reliability and efficiency of the reciprocating compressor can be increased. The structure also allows canceling unbalancing-force produced by the motions of the piston, connecting rod, and the eccentric section more effectively with the motion force of the balancing weight, so that the vibrations of the reciprocating compressor can be reduced. As a result, a highly reliable reciprocating compressor efficient in energy consumption and producing fewer vibrations is obtainable.

When the piston is at the top dead center, the balancing weight can be positioned such that the center of gravity thereof will not be over a plane including the axis line of the main shaft and being in parallel with the axis line of the cylinder. This structure allows easily specifying a place where the balancing weight is to be mounted.

Use of R600a refrigerant gas allows the reciprocating compressor of the present invention to produce smaller vibrations although the gas needs a piston having a greater capacity, namely, a greater diameter, due to the refrigerant characteristics, and such a greater piston tends to produce great vibrations.

The crankshaft of the reciprocating compressor of the present invention can be driven by an inverter operating at an rpm lower than the commercial power frequency. This structure allows the reciprocating compressor to suppress the vibrations which tend to become greater ones due to a low speed operation by the inverter.

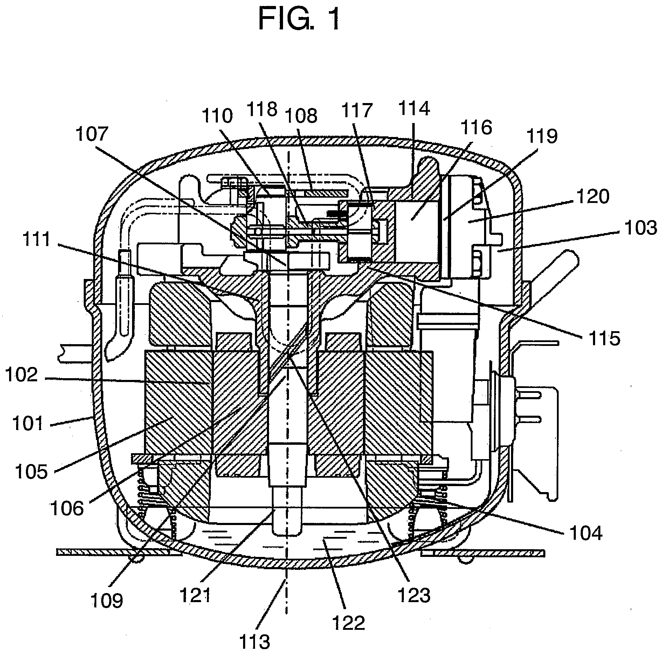

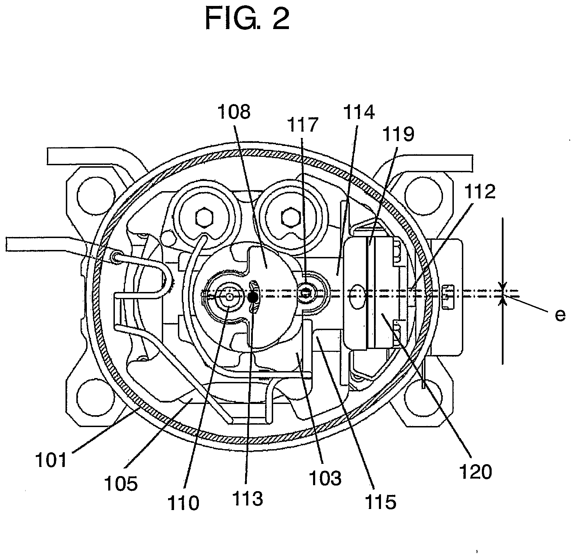

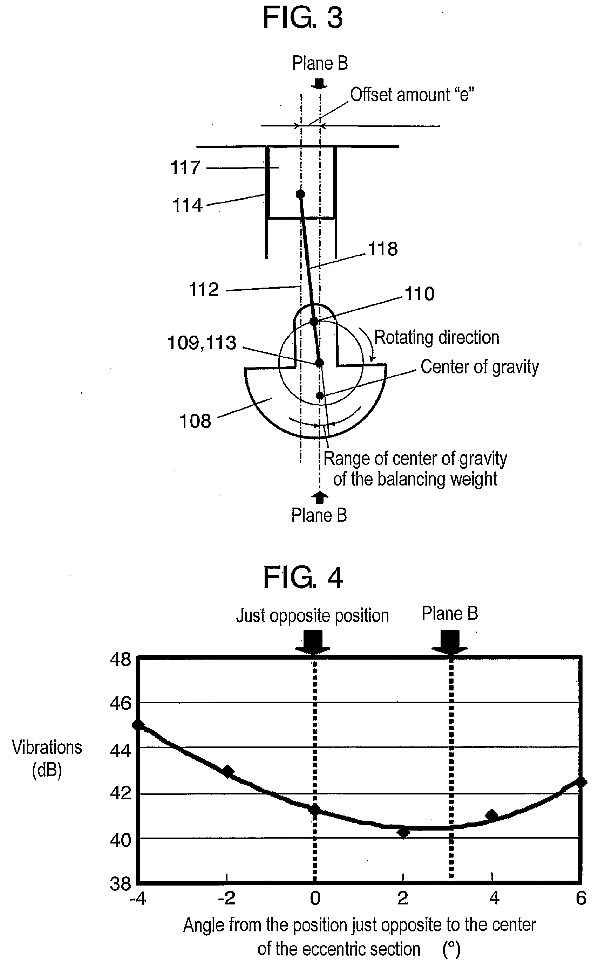

An embodiment of the present invention is demonstrated hereinafter with reference to the accompanying drawings. Fig. 1 shows a sectional view illustrating a reciprocating compressor in accordance with the embodiment of the present invention. Fig. 2 shows a top view illustrating the reciprocating compressor shown in Fig. 1. Fig. 3 schematically illustrates essential parts of the reciprocating compressor shown in Fig. 1. Fig. 4 shows vibration characteristics of the reciprocating compressor shown in Fig. 1.

In Figs. 1, 2 and 3, hermetic container 101 accommodates motor element 102 and compressing element 103 to be inverter-driven by the motor element 102. Motor element 102 and compressing element 103 are integrally formed together and resiliently supported by plural springs 104 in container 101. Springs 104 are placed at appropriate intervals along the inner circle of container 101. Refrigerant gas R600a is used here as refrigerant.

Motor element 102 includes stator 105 formed by laminating plate-like stator iron-cores and rotor 106 accommodated rotatably in stator 105. Crankshaft 107 includes main shaft 109 and eccentric section 110 via balancing weight 108. Rotor 106 is mounted on main shaft 109, and supported rotatably by plain bearing 111 of compressing element 103.

Compressing element 103 includes block 115, piston 117, connecting rod 118, valve plate 119, and cylinder head 120. Block 115 includes cylinder 114 that is placed such that cylinder axis line 112 runs through a position of cylinder 114 placed offset from axis line 113 of main shaft 109 by offset amount "e". Piston 117 is disposed slideably in compression chamber 116 formed by cylinder 114. Connecting rod 118 connects piston 117 to eccentric section 110 of crankshaft 107. Valve plate 119 is disposed on cylinder head 120 side of cylinder 114, and includes a sucking valve (not shown) and a discharging valve (not shown). Cylinder head 120 externally covers valve plate 119.

The reciprocating compressor of the present invention further includes balancing weight 108 disposed in eccentric section 110 of crankshaft 107 which performs rotating motion. Balancing weight 108 is adjusted its weight for balancing the unbalance produced by piston 117 reciprocating, eccentric section 110 rotating, and connecting rod 118 swinging.

Balancing weight 108 is placed such that the center of gravity thereof is positioned generally opposite the center of eccentric section 110 with respect to axis line 113 of the main shaft and deviated along the rotating direction of main shaft 109. On top of that, when piston 117 is at the top dead center, balancing weight 108 is positioned such that the center of gravity thereof will not be over plane B that includes axis line 113 of the main shaft and is in parallel with cylinder axis line 112. To be more specific, the center of gravity of balancing weight 108 is at +2° with respect to the just opposite position.

Crankshaft 107 has oil pump 121 at its lower section, and an end of pump 121 dips in oil 122 pooled in hermetic container 101. Rotating crankshaft 107 works oil pump 121, thereby supplying oil 122 to sliding sections of compressing element 103 via oil passage 123 provided in crankshaft 107. The respective sliding sections are thus lubricated.

An operation of the reciprocating compressor discussed above is demonstrated hereinafter. An inverter driving circuit (not shown) powers motor element 102 to start operating, which rotates rotor 106. Crankshaft 107 with balancing weight 108 rotates together with rotor 106, and the motion of eccentric section 110 travels through connecting rod 118, then reciprocates piston 117 in cylinder 114, so that the refrigerant (not shown) can be continuously compressed.

In this case, since cylinder 114 is placed such that its axis line 112 runs offset from axis line 113 of main shaft 109 by offset amount "e", the lateral pressure of piston 117 applied to cylinder 114 is reduced, thereby improving the reliability of the reciprocating compressor. On top of that, the total length and the sliding area of piston 117 can be reduced, so that a smaller input can operate the reciprocating compressor. Torque of motor element 102 can be designed smaller, which improves efficiency of motor element 102, so that the smaller input can operate the reciprocating compressor. As a result, the reciprocating compressor works more efficiently and consumes less power.

On the other hand, balancing weight 108 is placed such that the center of gravity thereof is positioned generally opposite the center of eccentric section 110 with respect to axial line 113 of the main shaft and deviated along the rotating direction of main shaft 109 from the place just opposite to the center of eccentric section 110. On top of that, when piston 117 is at the top dead center, balancing weight 108 is positioned such that the center of gravity thereof will not be over plane B that includes axis line 113 of the main shaft and is in parallel with cylinder axis line 112. This structure allows reducing the vibrations.

As the vibration characteristics in Fig. 4 tell, the center of gravity of balancing weight 108 is deviated, with respect to axis line 113 of the main shaft, from the place (0° position shown in Fig. 4) just opposite to the center of eccentric section 110 to the place where vibrations are minimized (shifted from the just opposite place by +2°), so that the vibrations can be minimized. This vibration-minimizing place can be found between the just opposite place and plane B by experimental methods. In Fig. 4, the placement angle of balancing weight 108 counts plus in the rotating direction of crankshaft 107.

In this embodiment, isobutane gas (R600a) is used as refrigerant gas, and R600a refrigerant needs a greater cylinder capacity due to its characteristics, so that a heavier piston 117 is needed, thus the reciprocating compressor naturally produces greater vibrations. Employment of balancing weight 108 allows the reciprocating compressor of the present invention to advantageously reduce the vibrations. A lower operating frequency of an inverter increases the vibrations of reciprocating compressors in general; however, since the reciprocating compressor of the present invention employs balancing weight 108, the vibrations can be substantially reduced even at a low operating frequency of the inverter.

As discussed above, this embodiment addresses the reciprocating compressor including an inverter-driven motor element; however, the present invention can be applied to reciprocating compressors including an induction motor element which is driven by a commercial power. This embodiment addresses a structure of the bearing formed of main shaft 109 and bearing 111; however, the present invention can be applied to reciprocating compressors employing a double-ended bearing, i.e. a second shaft is disposed opposite to main shaft 109 with respect to eccentric section 110.

In this embodiment, balancing weight 108 is added to eccentric section 110 of crankshaft 107; however, the present invention is not limited to this example. Balancing weight 108 can be added to an end of main shaft 109 or rotor 106 on compressing element 103 side. In the case of the reciprocating compressor having the second shaft, balancing weight 108 can be added to an end face of the second shaft. In those cases, specifying a position of the center of gravity will produce an advantage similar to what is discussed previously. Plural balancing weights can be positioned at different places. In this case, the composite center of gravity of the plural balancing weights is specified according to the present invention, so that a similar advantage to what is discussed previously is obtainable.

Balancing weight 108 is not limited to the style of being added to crankshaft 107 or rotor 106 as discussed in this embodiment, but it can be integrally formed with them. In this embodiment, compressing element 103 is placed on motor element 102; however, the compressing element can be placed beneath the motor element with a similar advantage.

### Industrial Applicability

A reciprocating compressor of the present invention is highly reliable, highly efficient, consumes less power, and produces smaller vibrations, so that it can be used in various applications that need a refrigerating cycle, such as home-use refrigerators, dehumidifiers, showcases, and vending machines.

### Reference numerals in the drawings

- 101: Hermetic container
- 103: Compressing element
- 107: Crankshaft
- 108: Balancing weight
- 109: Main shaft
- 110: Eccentric section
- 112: Axis line of the cylinder
- 113: Axis line of the main shaft
- 114: Cylinder
- 115: Block
- 117: Piston
- 118: Connecting rod

## Claims

1. A reciprocating compressor comprising:
a hermetic container (101); and
a compressing element (103) accommodated in the hermetic container (101) and
compressing refrigerant gas, the compressing element (103) including:
a crankshaft (107) disposed generally in a perpendicular direction and having a main shaft
(109) and an eccentric section (110);
a block (115) forming a cylindrical cylinder (114);
a piston (117) reciprocating in the cylinder (114); and
a connecting rod (118) connecting the eccentric section (110) to the piston (117);
wherein the cylinder (114) is disposed offset such that an axis line (112) of the cylinder (114) and an axis line (113) of the main shaft (109) do not cross each other,
**characterized in**
**that** the reciprocating compressor further comprises a balancing weight (108) for balancing vibrations produced by structural parts of the compressing element (103), wherein the structural parts include the piston (117) and/or the connecting rod (118) and/or the eccentric section (110), wherein
a center of gravity of the balancing weight (108) is placed opposite to a center of the eccentric section (110) with respect to the axis line (113) of the main shaft (109) and deviated along a rotating direction of the main shaft (109) from a line connecting the axis line (113) of the main shaft (109) and the center of the eccentric section (110), and
relative positions of the center of gravity of the balancing weight (108) and the center of the eccentric section (110) with respect to the axis line (113) of the main shaft (109) are maintained during operation of the reciprocating compressor.

2. The reciprocating compressor of claim 1, wherein when the piston (117) is at a top dead center, the center of gravity of the balancing weight (108) is placed not to be over a plane (B) including the axis line (113) of the main shaft (109) and being in parallel with the axis line (112) of the cylinder (114).

3. The reciprocating compressor of claim 1, wherein the refrigerant gas is called R600a.

4. The reciprocating compressor of claim 1, wherein the crankshaft (107) is driven by an inverter which operates at a frequency not greater than a commercial power frequency.

## Patentansprüche

1. Hubkolbenverdichter, umfassend:
einen hermetischen Behälter (101); und
ein Kompressionselement (103), das in dem hermetischen Behälter (101) untergebracht ist und Kältemittelgas komprimiert, wobei das Kompressionselement (103) umfasst:
eine Kurbelwelle (107), die im Allgemeinen in einer senkrechten Richtung angeordnet ist und eine Hauptwelle (109) sowie einen exzentrischen Abschnitt (110) aufweist;
einen Block (115), der einen zylindrischen Zylinder (114) bildet;
einen Kolben (117), der sich in dem Zylinder (114) hin und her bewegt; und
eine Pleuelstange (118), die den exzentrischen Abschnitt (110) mit dem Kolben (117) verbindet;
wobei der Zylinder (114) derart versetzt angeordnet ist, dass sich eine Achslinie (112) des Zylinders (114) und eine Achslinie (113) der Hauptwelle (109) nicht kreuzen, **dadurch gekennzeichnet, dass**
der Hubkolbenverdichter weiterhin ein Ausgleichsgewicht (108) zum Ausgleichen von Schwingungen aufweist, die durch Bauteile des Verdichtungselements (103) erzeugt werden, wobei die Bauteile den Kolben (117) und/oder die Pleuelstange (118) und/oder den exzentrischen Abschnitt (110) umfassen, wobei
ein Schwerpunkt des Ausgleichsgewichts (108) gegenüber einem Mittelpunkt des exzentrischen Abschnitts (110) in Bezug auf die Achslinie (113) der Hauptwelle (109) angeordnet und entlang einer Drehrichtung der Hauptwelle (109) von einer Linie verschoben ist, die die Achslinie (113) der Hauptwelle (109) und die Mitte des exzentrischen Abschnitts (110) verbindet, und
relative Positionen des Schwerpunkts des Ausgleichsgewichts (108) und des Mittelpunkts des exzentrischen Abschnitts (110) in Bezug auf die Achslinie (113) der Hauptwelle (109) während des Betriebs des Hubkolbenverdichters aufrechterhalten werden.

2. Hubkolbenverdichter nach Anspruch 1, bei dem, wenn sich der Kolben (117) in einem oberen Totpunkt befindet, der Schwerpunkt des Ausgleichsgewichts (108) so angeordnet ist, dass er nicht über einer Ebene (B) liegt, die die Achslinie (113) der Hauptwelle (109) umfasst und parallel zu der Achslinie (112) des Zylinders (114) ist.

3. Hubkolbenverdichter nach Anspruch 1, bei dem das Kühlmittel R600a genannt wird.

4. Hubkolbenverdichter nach Anspruch 1, bei dem die Kurbelwelle (107) von einem Wechselrichter angetrieben wird, der mit einer Frequenz arbeitet, die nicht größer als eine handelsübliche Netzfrequenz ist.

## Revendications

1. Compresseur alternatif comprenant:
un récipient hermétique (101); et
un élément de compression (103) logé dans le récipient hermétique (101) et comprimant le gaz réfrigérant, l'élément de compression (103) comprenant:
un vilebrequin (107) disposé généralement dans une direction perpendiculaire et ayant un arbre principal (109) et une section excentrique (110);
un bloc (115) formant un cylindre cylindrique (114);
un piston (117) alternatif dans le cylindre (114); et
une bielle (118) reliant la section excentrique (110) au piston (117);
dans lequel le cylindre (114) est disposé de manière décalée de sorte qu'une ligne d'axe (112) du cylindre (114) et une ligne d'axe (113) de l'arbre principal (109) ne se croisent pas,
**caractérisé en**
**ce que** le compresseur alternatif comprend en outre une masse d'équilibrage (108) pour équilibrer les vibrations produites par des parties structurelles de l'élément de compression (103), les parties structurelles comprenant le piston (117) et/ou la bielle (118) et/ou section excentrique (110), dans lequel un centre de gravité de la masse d'équilibrage (108) est placé en face du centre de la section excentrique (110) par rapport à l'axe (113) de l'arbre principal (109) et dévié dans une direction de rotation de l'arbre principal (109) à partir d'une ligne reliant la ligne d'axe (113) de l'arbre principal (109) au centre de la section excentrique (110), et
les positions relatives du centre de gravité de la masse d'équilibrage (108) et du centre de la section excentrique (110) par rapport à la ligne d'axe (113) de l'arbre principal (109) sont maintenues pendant le fonctionnement du compresseur alternatif.

2. Compresseur alternatif selon la revendication 1, dans lequel, lorsque le piston (117) est au poids mort supérieur, le centre de gravité de la masse d'équilibrage (108) est placé de manière à ne pas dépasser d'un plan (B) comprenant la ligne d'axe (113) de l'arbre principal (109) et étant parallèle à la ligne d'axe (112) du cylindre (114).

3. Compresseur alternatif selon la revendication 1, dans lequel le gaz réfrigérant est appelé R600a.

4. Compresseur alternatif selon la revendication 1, dans lequel le vilebrequin (107) est entraîné par un inverseur qui fonctionne à une fréquence ne dépassant pas une fréquence de puissance commerciale.
